# EUROPEAN PATENT SPECIFICATION

(11) **EP 3 775 438 B1**
(45) Date of publication and mention of the grant of the patent: **14.09.2022**
(21) Application number: 19715788.6
(22) Date of filing: 25.03.2019
(51) Int. Cl.: E04H 12/34, E04H 12/12, B29C 64/00

(54) **ADDITIVELY MANUFACTURED TOWER STRUCTURE AND METHOD OF FABRICATION**
GENERATIV GEFERTIGTE TURMSTRUKTUR UND VERFAHREN ZUR HERSTELLUNG
STRUCTURE DE TOUR FABRIQUÉE DE MANIÈRE ADDITIVE ET PROCÉDÉ DE FABRICATION

(30) Priority: 26.03.2018 US 201815935060
(43) Date of publication of application: 17.02.2021
(73) Proprietor: General Electric Company, Schenectady, NY 12345 (US)
(72) Inventor: MEYER, Pascal, New York 12309 (US); ROCK, JR., Peter Joseph, New York 12309 (US); SALAS NOBREGA, Ken Ivcar, New York 12309 (US); BELLUCCI, Matteo, New York 12309 (US); FANG, Biao, New York 12309 (US); COOPER, Gregory Edward, New York 12345 (US); TURNQUIST, Norman Arnold, New York 12309 (US)
(74) Representative: Zimmermann & Partner Patentanwälte mbB
(86) International application number: PCT/US2019/023822
(87) International publication number: WO 2019/190956

(56) References cited:
- EP-A1- 3 118 394
- WO-A1-2016/119035
- WO-A1-2017/181060
- WO-A2-2007/050972

## Description

### BACKGROUND

The present invention relates to wind turbines, and more particularly, to an additively manufacture wind tower structural section for a wind turbine tower and method of fabrication.

Generally, a wind turbine includes a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. The rotor, generator, gearbox and other components are typically mounted within a housing, or nacelle, that is positioned on a base that includes a truss or tubular tower.

Wind turbine towers typically include a number of cylindrical sections coupled to each other. The tower sections are usually bolted together through internally placed horizontal flanges, which are welded to the top and bottom of each tower section. Large towers are needed to support wind turbines and the towers need to withstand strong lateral forces caused by environmental conditions such as the wind. The tower sections require large wall thicknesses to withstand these forces leading to high material, manufacturing and transportation costs for the completed tower. Additionally, tons of required mass are added to the base of the tower to meet stiffness requirements so as to withstand the strong lateral, wind forces. For example, for some known towers, approximately 30 tons of mass is added to the tower base to comply with stiffness requirements.

Some of the known tower manufacturing processes involve many labor and equipment intensive steps. Generally, during manufacturing, an extruded sheet of metal is rolled around a longitudinal welding machine at an offsite location. The welder longitudinally welds the rolled sheets to a tower length, known as a "can". Cans are then moved and mounted on blocks in an end-to-end configuration. A seam welder proceeds to weld an interface between adjoining cans to form a tubular tower section. Each section is then moved and loaded onto a truck for individual transportation to the tower assembly site.

Transportation regulations, however, limit load sizes of shipped products. For example, tower sections are limited in diameter to about 4.3 meters (m) (14 feet (ft)), due to road transportation barriers, such as bridges that span a highway. To comply with transportation regulations, the length of each assembled tower section is curtailed. Accordingly, an increase in the number of formed tower lengths results in an increase in manufacturing costs, transportation costs and on-site assembly costs.

Accordingly, there exists a need in the art to provide for a wind turbine tower that provides on-site manufacture to address the issue of increasing transportation difficulties that arise with larger diameter tower sections. There additionally exists a need for customized wind turbine tower wall designs that increase strength or reduce the amount of reinforcement needed, while providing for on-site manufacture.

<Insert page 2a here.>

### BRIEF DESCRIPTION

These and other shortcomings of the prior art are addressed by the present disclosure.

One aspect of the present invention resides in a wind turbine according to appended claim 1.

WO 2017/181060 A1 relates to freeform, additive manufacturing equipment, processes and products, including residential, commercial and other buildings. It is described that a movable extruder places extrudate that solidifies in open space to create "scaffolding" or "skeletons" of buildings and other products. It is further described that elongated extrudate elements are fused to each other or connected by other means to form a cellular structure. It is yet further desribed that filler material such as polymeric insulating foam may simultaneously or thereafter be placed within the cellular structure to contribute desired strength, rigidity, insulative, barrier or other properties.

WO 2007/050972 A2 describes a nozzle for extruding a surface may include a first outlet configured to controllably extrude a first extrudate of unhardened material, a second outlet configured to controllably extrude a second extrudate of unhardened material that is separated from the first extrudate, a third outlet configured to extrude a third extrudate of unhardened material between the first and the second extrudates, and a controller. The third outlet may have a width that is substantially less than the distance between the first and second extrudates. The controller may be configured to cause the third extrudate to repeatedly traverse between the first and second extrudates and/or to cause the third extrudate to leave a plurality of substantial and separated spaces between the first and second extrudates.

Yet another aspect of the invention resides in a method of fabricating a wind turbine according to appended claim 8.

Various refinements of the features noted above exist in relation to the various aspects of the present disclosure. Further features may also be incorporated in these various aspects as well.

### BRIEF DESCRIPTION OF THE FIGURES

The above and other features, aspects, and advantages of the present disclosure will become better understood when the following detailed description is read with reference to the accompanying drawings in which like characters represent like parts throughout the drawings, wherein:
FIG. 1 is a schematic view of an exemplary wind turbine, in accordance with one or more embodiments of the present disclosure;
FIG. 2 is a schematic isometric view of an exemplary embodiment of a multi-material additively manufactured tower section for use in facilitating assembly of a tower mast, in accordance with one or more embodiments of the present disclosure;
FIG. 3 is a schematic top view of the multi-material additively manufactured tower section of FIG. 1, in accordance with one or more embodiments of the present disclosure;
FIG. 4 is a schematic isometric view of another embodiment of a multi-material additively manufactured tower section for use in facilitating assembly of a tower mast, in accordance with one or more embodiments of the present disclosure;
FIG. 5 is a schematic top view of the multi-material additively manufactured tower section of FIG. 4, in accordance with one or more embodiments of the present disclosure;
FIG. 6 is a schematic isometric view of another embodiment of a multi-material additively manufactured tower section for use in facilitating assembly of a tower mast, in accordance with one or more embodiments of the present disclosure;
FIG. 7 is a schematic top view of the multi-material additively manufactured tower section of FIG. 6, in accordance with one or more embodiments of the present disclosure;
FIG. 8 is a schematic isometric view of another embodiment of a multi-material additively manufactured tower section for use in facilitating assembly of a tower mast, in accordance with one or more embodiments of the present disclosure;
FIG. 9 is a schematic top view of the multi-material additively manufactured tower section of FIG. 8, in accordance with one or more embodiments of the present disclosure;
FIG. 10 is a cut-away isometric view of a portion of a multi-material additively manufactured tower section, in accordance with one or more embodiments of the present disclosure;
FIG. 11 is a partial exploded orthogonal view of a portion of a multi-material additively manufactured tower section and a tower flange, in accordance with one or more embodiments of the present disclosure;
FIG. 12 is a cross-section of a plurality of multi-material additively manufactured tower sections coupled to a plurality of flanges, in accordance with one or more embodiments of the present disclosure;
FIG. 13 illustrates flange portions shown in FIG. 12 coupled together by a fastener, in accordance with one or more embodiments of the present disclosure;
FIG. 14 is a schematic top view of an exemplary embodiment of a method of forming the multi-material additively manufactured tower section of FIGs. 2 and 3, in accordance with one or more embodiments of the present disclosure;
FIG. 15 is a schematic top view of another exemplary embodiment of a method of forming the multi-material additively manufactured tower section of FIGs. 2 and 3, in accordance with one or more embodiments of the present disclosure;
FIG. 16 is a schematic top view of an exemplary embodiment of a method of forming the multi-material additively manufactured tower section of FIGs. 6 and 7, in accordance with one or more embodiments of the present disclosure;
FIG. 17 is a schematic top view of another exemplary embodiment of a method of forming the multi-material additively manufactured tower section of FIGs. 6 and 7, in accordance with one or more embodiments of the present disclosure;
FIG. 18 is a schematic isometric view of another embodiment of a plurality of multi-material additively manufactured tower sections in a nested configuration for use in facilitating assembly of a tower mast, in accordance with one or more embodiments of the present disclosure; and
FIG. 19 is a schematic top view of the plurality of multi-material additively manufactured tower sections of FIG. 18, in accordance with one or more embodiments of the present disclosure.

### DETAILED DESCRIPTION

The disclosure will be described for the purposes of illustration only in connection with certain embodiments; however, it is to be understood that other objects and advantages of the present disclosure will be made apparent by the following description of the drawings according to the disclosure. While preferred embodiments are disclosed, they are not intended to be limiting. Rather, the general principles set forth herein are considered to be merely illustrative of the scope of the present disclosure and it is to be further understood that numerous changes may be made without straying from the scope of the present invention as defined by the appended claims.

"Additive manufacturing" is a term used herein to describe a process which involves layer-by-layer construction or additive fabrication (as opposed to material removal as with conventional machining processes). Such processes may also be referred to as "rapid manufacturing processes". Additive manufacturing processes include, but are not limited to: Direct Metal Laser Melting (DMLM), Laser Net Shape Manufacturing (LNSM), Electron Beam Sintering (EBS), Selective Laser Sintering (SLS), 3D printing, Sterolithography (SLA), Electron Beam Melting (EBM), Laser Engineered Net Shaping (LENS), and Direct Metal Deposition (DMD). In addition, the terms "3D printing" and "additive manufacturing" have the same meaning, and may be used interchangeably. The 3D printing device used in the context of embodiments of the invention can be realized to print or deposit a layer of any material that is suitable for constructing a tower.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the terms "first", "second", or the like are intended for the purpose of orienting the reader as to specific components parts.

As used herein, the term "multi-material" denotes the use of multiple materials and is intended to encompass the use of any number of materials, such as the use of two or more materials.

Moreover, in this specification, the suffix "(s)" is usually intended to include both the singular and the plural of the term that it modifies, thereby including one or more of that term (e.g., "the opening" may include one or more openings, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. Similarly, reference to "a particular configuration" means that a particular element (e.g., feature, structure, and/or characteristic) described in connection with the configuration is included in at least one configuration described herein, and may or may not be present in other configurations. In addition, it is to be understood that the described inventive features may be combined in any suitable manner in the various embodiments and configurations.

As discussed in detail below, embodiments of the present disclosure provide a bi-material additively manufactured wind tower structure and method of fabrication. The use of additively manufacturing technologies, such as 3D printing, enables onsite manufacturing of the tower structure, also referred to herein as a tower mast.

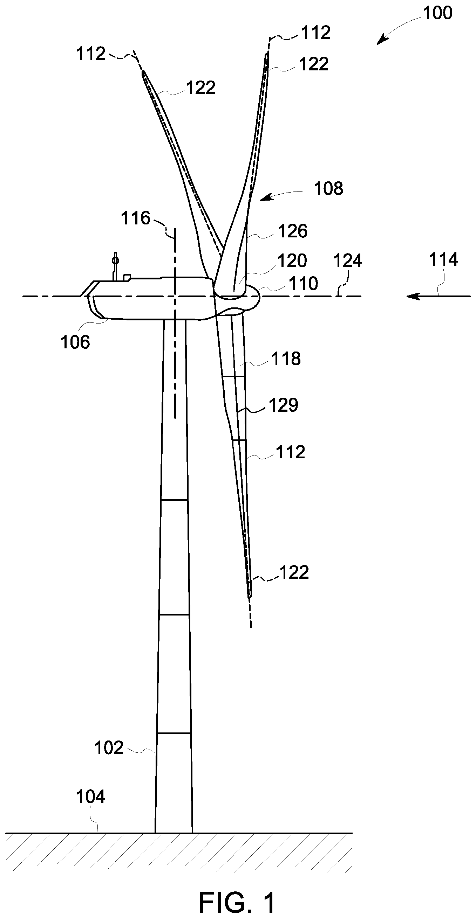

FIG. 1 is a schematic view of an exemplary wind turbine 100. In the exemplary embodiment, wind turbine 100 is a horizontal-axis wind turbine. Alternatively, the wind turbine 100 may be a vertical-axis wind turbine. In the exemplary embodiment, the wind turbine 100 includes a tower mast 102 extending from and coupled to a supporting surface 104. The tower mast 102 is comprised of a plurality of cylindrical tower sections (described presently). The tower mast 102 may be coupled to the supporting surface 104 with a plurality of anchor bolts or via a foundation mounting piece (neither shown), for example. A nacelle 106 is coupled to the tower mast 102, and a rotor 108 is coupled to the nacelle 106. The rotor 108 includes a rotatable hub 110 and a plurality of rotor blades 112 coupled to the hub 110. In the exemplary embodiment, the rotor 108 includes three rotor blades 112. Alternatively, the rotor 108 may have any suitable number of rotor blades 112 that enables the wind turbine 100 to function as described herein. The tower mast 102 may have any suitable height and/or construction that enables the wind turbine 100 to function as described herein.

The rotor blades 112 are spaced about the rotatable hub 110 to facilitate rotating the rotor 108, thereby transferring kinetic energy from a wind force 114 into usable mechanical energy, and subsequently, electrical energy. The rotor 108 and the nacelle 106 are rotated about the tower mast 102 on a yaw axis 116 to control a perspective, or azimuth angle, of the rotor blades 112 with respect to the direction of the wind 114. The rotor blades 112 are mated to the hub 110 by coupling a blade root portion 118 to the hub 110 at a plurality of load transfer regions 120. Each load transfer region 120 has a hub load transfer region and a blade load transfer region (both not shown in FIG. 1). Loads induced to the rotor blades 112 are transferred to the hub 110 via load the transfer regions 120. Each rotor blade 112 also includes a blade tip 122.

In the exemplary embodiment, the rotor blades 112 have a length of between approximately 30 meters (m) (99 feet (ft)) and approximately 120 m (394 ft). Alternatively, the rotor blades 112 may have any suitable length that enables the wind turbine 100 to function as described herein. For example, the rotor blades 112 may have a suitable length less than 30 m or greater than 120 m. As wind 114 contacts the rotor blade 112, blade lift forces are induced to the rotor blade 112 and rotation of the rotor 108 about an axis of rotation 124 is induced as the blade tip 122 is accelerated.

A pitch angle (not shown) of the rotor blades 112, i.e., an angle that determines the perspective of the rotor blade 112 with respect to the direction of the wind 114, may be changed by a pitch assembly (not shown in FIG. 1). Increasing a pitch angle of rotor blade 112 decreases blade deflection by reducing aero loads on the rotor blade 112 and increasing an out-of-plane stiffness from the change in geometric orientation. The pitch angles of the rotor blades 112 are adjusted about a pitch axis 126 at each rotor blade 112. In the exemplary embodiment, the pitch angles of the rotor blades 112 are controlled individually. Alternatively, the pitch angles of the rotor blades 112 are controlled as a group.

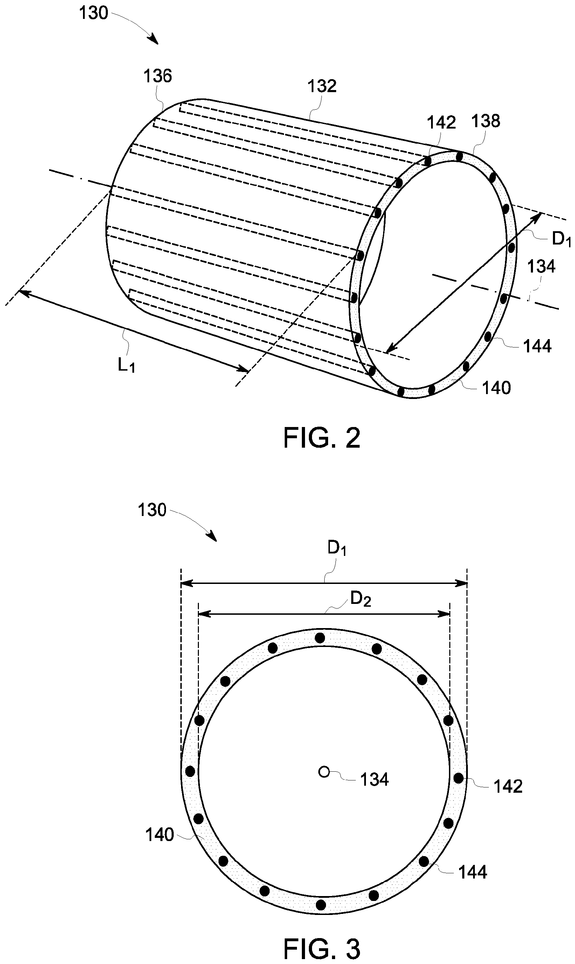

FIGs. 2 and 3 are schematic views of an exemplary embodiment of a multi-material tower section as disclosed herein. Illustrated in a schematic isometric view (FIG. 2) and top schematic view (FIG. 3) is a multi-material tower section 130 for use in facilitating assembly of tower mast 102 (shown in FIG. 1). In the exemplary embodiment, multi-material tower section 130 is defined by a wall structure 132 and is orientated in a tubular shape about a longitudinal axis "X" 134. The multi-material tower section 130, however, can include any configuration that facilitates assembly of tower mast 102. The multi-material tower section 130 has a length L₁, as measured between ends 136, 138, in a range between about 1m and about 60m. Further, the multi-material tower section 130 has a diameter D₁ in a range between about 4.3m and about 10.0m and an inner diameter D₂ in a range between about 3.7m and about 9.4m, each dependent upon placement of the multi-material tower section 130 within the tower mast structure 102. The multi-material tower section 130 may have constant diameters over the entire length, L₁, or taper from end 136 to end 138, resulting in a tapered tower mast. In the exemplary embodiment, section 130 includes a substantially straight configuration to facilitate forming a tower mast, such as tower mast 102 (FIG. 1) having a substantially straight cylindrical shape. In an alternate embodiment, the multi-material tower section 130 may be configured to provide a tower mast having an alternate shape, such as, but not limited to, triangular, oval, square, polygonal, hexagonal, octagonal shapes, honeycomb and any other cross section that is deemed optimal for the wind conditions at the turbine site.

The multi-material tower section 130 of FIGs. 2 and 3 is formed on-site by additive manufacturing techniques (described presently), such as 3D printing. The multi-material tower section 130 is formed of a concrete material 140 having at least one internal reinforcement structure 142 formed therein the concrete material 140. In this particular embodiment, the at least one internal reinforcement structure 142 comprises a plurality of embedded steel reinforcements, and more specifically a plurality of embedded steel reinforcement bars144, often referred to as "rebar". Accordingly, this particular embodiment may be described as a multi-material tower section 130, and more particularly comprised as a bimaterial tower structure. In an alternate embodiment, the at least one internal reinforcement structure 142 comprises a plurality of embedded reinforcements comprised of a composite material, or any other material applicable to provide the required strength to the overall structure. In yet another alternate embodiment, the multi-material tower section 103 may be comprised of more than the two named materials.

In the embodiment of FIGs. 2 and 3, the at least one internal reinforcement structure 142 is formed of continuous metal strands that are easily formed during the additive manufacturing process (described presently) along the entire length L₁ of the multi-material tower section 130. The at least one internal reinforcement structure 142 stabilizes the concrete material 140 and improves crack resistance properties of the concrete material 140. In an embodiment, the at least one additively manufactured internal reinforcement structure 142 is engineered and built to specific locations within the wall structure 132 forming the multi-material tower section 130 such that the overall weight of the multi-material tower section 130 and the resultant tower mast, formed of one or more of the multi-material tower sections 130, is reduced.

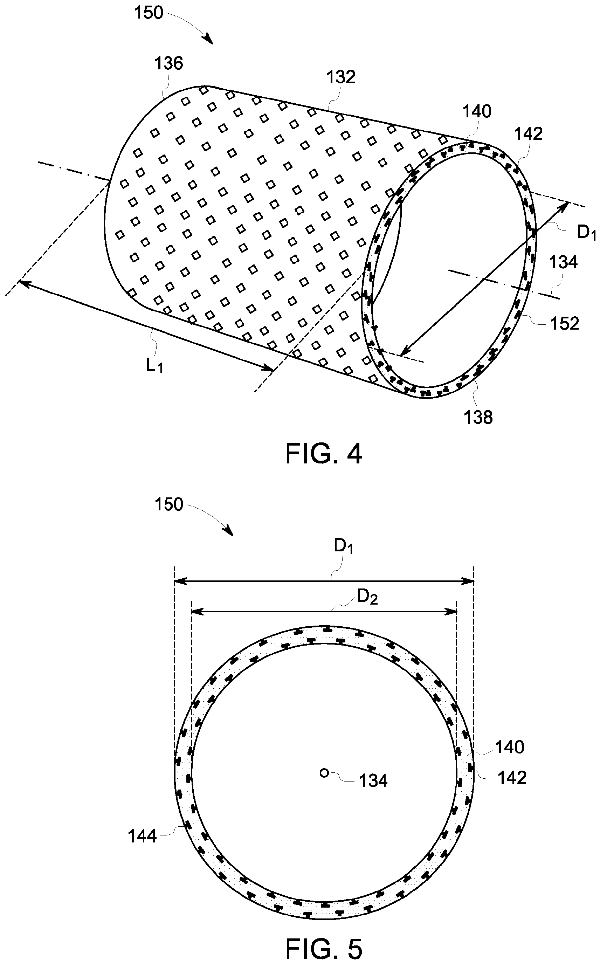

Referring now to FIGs. 4 and 5, illustrated are schematic views of another exemplary embodiment of a multi-material tower section as disclosed herein. It should be understood that like elements have like numbers throughout the embodiments described herein. Illustrated in a schematic isometric view (FIG. 4) and top schematic view (FIG. 5) is a multi-material tower section 150 for use in facilitating assembly of tower mast 102 (shown in FIG. 1). In the exemplary embodiment, multi-material tower section 150 is defined by a wall structure 132 and is orientated in a tubular shape about a longitudinal axis "X" 134. As previously described with regard to the embodiment of FIGs. 2 and 3, the multi-material tower section 150 can include any configuration that facilitates assembly of tower mast 102. The multi-material tower section 150 has a length L₁, as measured between ends 136, 138, in a range between about 1 m and about 60 m. Further, the multi-material tower section 150 has an outer diameter D₁ in a range between about 4.3m and about 10.0m and an inner diameter D₂ in a range between about 3.7m and about 9.4m, each dependent upon placement of the multi-material tower section 150 within the tower mast structure. The multi-material tower section 150 may have a constant diameter over the entire length, L₁, or taper from end 136 to end 138, resulting in a tapered tower mast 102. In the exemplary embodiment, the multi-material tower section 150 includes a substantially straight configuration to facilitate forming a tower mast, such as tower mast 102 (FIG. 1) having a substantially straight cylindrical shape. In an alternate embodiment, the multi-material tower section 150 may be configured to provide a tower mast having an alternate shape, such as, but not limited to, triangular, oval, square, polygonal, hexagonal, octagonal shapes, honeycomb and any other cross section that is deemed optimal for the wind conditions at the turbine site.

Similar to the embodiment of FIGs. 2 and 3, the multi-material tower section 150 of FIGs. 4 and 5 is formed on-site by additive manufacturing techniques (described presently), such as 3D printing. The multi-material tower section 150 is formed of a concrete material 140 having at least one internal reinforcement structure 142 formed therein the concrete material 140. In this particular embodiment, the at least one internal reinforcement structure 142 comprises a plurality of embedded steel t-studs 152. The plurality of embedded steel t-studs152 are oriented to extend radially from at least one of the outer diameter D₁ or the inner diameter D₂ of the multi-material tower section 150. In the illustrated embodiment of FIGs. 3 and 4, the plurality of embedded steel t-studs 152 extend radially from both the inner diameter D₁ and the outer diameter D₂ of the multi-material tower section 150. In the embodiment of FIGs. 4 and 5, the at least one internal reinforcement structure 142 is formed during the additive manufacturing process (described presently) dispersed along the entire length L₁ of the multi-material tower section 150. The at least one internal reinforcement structure 142, and more particularly, the plurality of embedded t-studs 152 stabilize the concrete material 140 and improve crack resistance properties of the concrete material 140. In an embodiment, the additively manufactured at least one internal reinforcement structure 142 is engineered and built to specific locations within the wall structure 132 forming the multi-material tower section 150 such that the overall weight of the multi-material tower section 150 and the resultant tower mast, formed of one or more of the multi-material tower sections 150, is reduced.

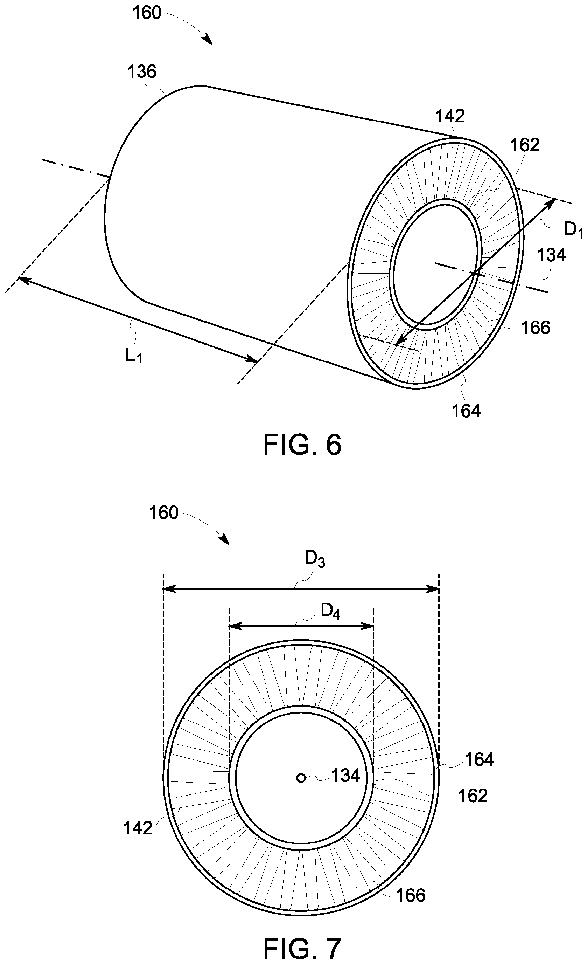

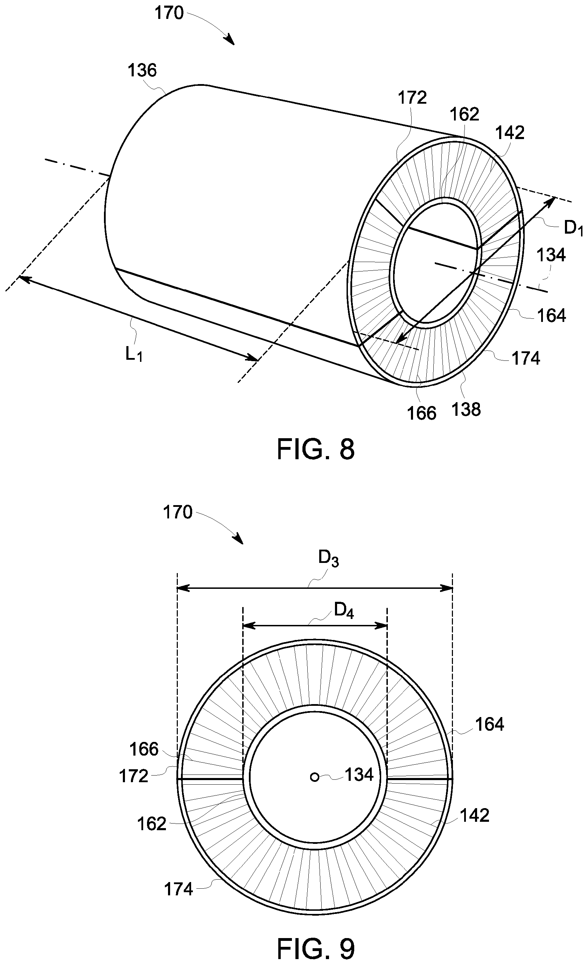

Referring now to FIGs. 6-9, illustrated are schematic views of additional exemplary embodiments of a multi-material tower section as disclosed herein. Illustrated in a schematic isometric view (FIG. 6) and top schematic view (FIG. 7) is a multi-material tower section 160 for use in facilitating assembly of tower mast 102 (shown in FIG. 1). In addition, illustrated in a schematic isometric view (FIG. 8) and top schematic view (FIG. 9) is a multi-material tower section 170 for use in facilitating assembly of tower mast 102 (shown in FIG. 1). As in the previously disclosed embodiments, in the exemplary embodiments of FIGs. 6-9, the multi-material tower sections 160 and 170 are each defined by a wall structure 132 and orientated in a tubular shape about a longitudinal axis "X" 134.

In contrast to the previous embodiments, the multi-material tower section 170 is illustrated as formed of multiple subcomponents 172, 174 that are joined together subsequent to fabrication (described presently), but may be formed as a single piece in a manner similar to the multi-material tower section 160. As illustrated the multi-material tower section 170 is illustrated formed in two pieces, but it is anticipated the multi-material tower section 170 could be formed of any number of sub-component pieces. In addition, it should be understood that additionally, the multi-material tower sections 130, 150 and 160 although illustrated as formed of a single piece, may be fabricated as including subcomponents that are joined together subsequent to fabrication.

As previously described with regard to the embodiment of FIGs. 2 and 3, the multi-material tower sections 160 and 170 can include any configuration that facilitates assembly of tower mast 102. The multi-material tower sections 160 and 170 have a length L₁, as measured between ends 136, 138, similar to the disclosed previous embodiments. Further, each of the multi-material tower sections 160 and 170 have an outer diameter D₁ and an inner diameter D₂ similar to the disclosed previous embodiments, each dependent upon placement of the multi-material tower section 160 and 170 within the tower mast structure. The multi-material tower sections 160 and 170 may have constant diameters over the entire length, L₁, or taper from end 136 to end 138, resulting in a tapered tower mast. In the exemplary embodiments, the multi-material tower sections 160 and 170 include a substantially straight configuration to facilitate forming a tower mast, such as tower mast 102 (FIG. 1) having a substantially straight cylindrical shape. In alternate embodiments, the multi-material tower sections 160 and 170 may be configured to provide a tower mast having an alternate shape, such as, but not limited to, triangular, oval, square, polygonal, hexagonal, octagonal shapes, honeycomb and any other cross section that is deemed optimal for the wind conditions at the turbine site.

Similar to the embodiment of FIGs. 2 and 3, the multi-material tower section 160 of FIGs. 6 and 7 and the multi-material tower section 170 of FIGs. 8 and 9 are formed on-site by additive manufacturing techniques (described presently), such as 3D printing. In contrast to the previously disclosed embodiments, the multi-material tower sections 160 and 170, and more particularly the wall structure 132 of each is formed of an inner tubular shell 162 and an outer tubular shell 164. In an embodiment, the inner tubular shell 162 and the outer tubular shell 164 are formed of steel. In another embodiment, the inner tubular shell 162 and the outer tubular shell 164 are formed of a composite material. The multi-material tower sections 160 and 170 are further formed of at least one internal reinforcement structure 142. In the embodiments of FIGs. 6-9, the at least one internal reinforcement structure 142 comprises an internal truss structure 166 spanning a distance between the inner tubular shell 162 and the outer tubular shell 164. In an embodiment, the truss structure 166 may comprise any number of truss configurations, such as, but not limited to a sinusoidal configuration, as best illustrated in FIGs. 6 and 7, a straight configuration, as best illustrated in FIGs. 8 and 9, a trapezoidal configuration (not shown), honey-comb, or the like.

In the illustrated embodiments of FIGs. 6-9, the internal truss structure 166 extends substantially radially between an inner diameter D₃ of the outer tubular shell 164 and an outer diameter D₄ of the inner tubular shell 162. In an alternate embodiment, the internal truss structure 166 may overlap at least a portion of the outer tubular shell 164 and the inner tubular shell 162. In the embodiment of FIGs. 6-9, the inner tubular shell 162, the outer tubular shell 164 and the internal reinforcement structure 142, and more particularly the truss structure 166 are formed during the additive manufacturing process (described presently) along the entire length L₁ of each the multi-material tower sections 160 and 170. In an embodiment, each of the additively manufactured inner tubular shell 162, the outer tubular shell 164 and the internal reinforcement structure 142 are engineered and built to specific locations within the wall structure 132 forming the multi-material tower sections 160 and 170 such that the overall weight of each of the multi-material tower sections 160 and 170 and the resultant tower mast, formed of one or more of the multi-material tower sections 160 and 170 is reduced. In addition, by separating the inner tubular shell 162 and the outer tubular shell 164, the moment of inertia of the tower mast, such as tower mast 102 of FIG. 1, can be increased resulting in higher sustained loads, minimized stresses, and improved resistance to buckling.

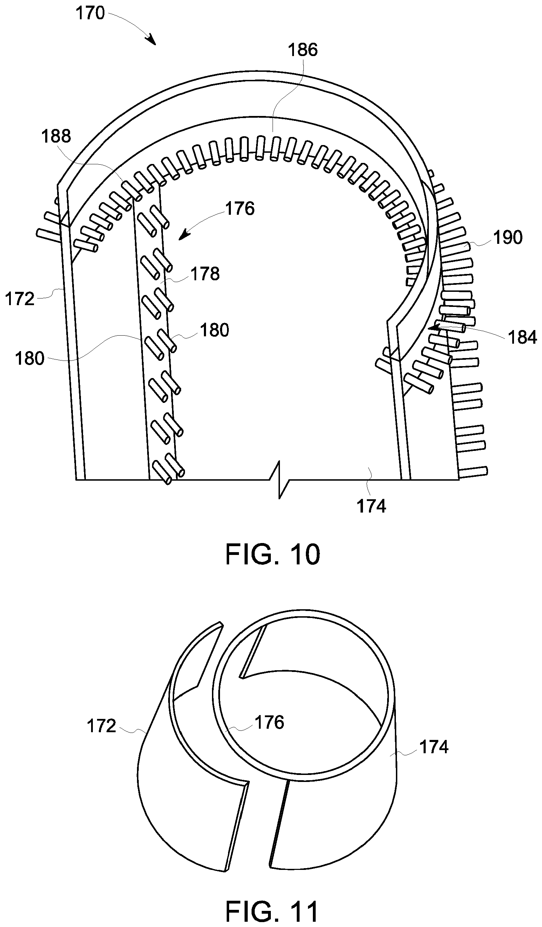

FIG. 10 illustrates a method of joining the plurality of the multiple subcomponents 172 and 174 of the multi-material tower section 170 of FIGs. 8 and 9 and joining of the multi-material tower section 170 to another tower section of the tower mast 102. It should be understood that the method of joining is additionally applicable to the joining of the multi-material tower sections 130, 150 and 160 when formed of multiple subcomponents, each of less than 360 degrees and/or the joining of the multi-material tower sections 130, 150 and 160 to another tower section of the tower mast 102. In the described method, the multi-material tower section 170 is illustrated as being formed of the multiple subcomponents 172, 174. In this particular embodiment, the multiple subcomponents 172, 174 are joined at a vertical splice joint 176 formed by overlapping portion of the multiple subcomponents 172, 174. In the illustrated embodiment of FIG. 10, an inner joining section 178 is provided to join the multiple subcomponents 172, 174 at the vertical splice joint 176. The inner joining section 178 may be formed of steel, a printed composite, or the like. A plurality of through holes 180 may be formed in each of the multiple subcomponents 172, 174 and the inner joining section 178, facilitating the insertion therein of a fastener 182 and locking the multiple subcomponents 172, 174 together to form the vertical splice joint 176. In addition, as illustrated in FIG. 10, the multi-material tower section 170 is configured for coupling to another section of the tower mast 102, generally similar to multi-material tower section 170, (not shown) at a circumferential splice joint 184.

The circumferential splice joint 184 is formed in generally the same manner as the vertical splice joint 176 and may include an inner joining section 186 and a plurality of through holes 188 formed in each of the multi-material tower sections 170 and the inner joining section 186. The a plurality of through holes 188 facilitate the insertion therein of a fastener 190 and locking the multi-material tower sections 170 together to form the circumferential splice joint 184. Similar to the inner joining section 178, the inner joining section 186 may be formed of steel, a printed composite, or the like.

In an alternate embodiment, a plurality of the multi-material tower sections 170 may be joined by one or more flange portions, as best illustrated in FIGs. 11-13. It should be understood that the method of joining is additionally applicable to the joining of the multi-material tower sections 130, 150 and 160 to another tower section of the tower mast 102. Based on the tower height, one multi-material tower section 170 may be welded to a flange portion 192 and another section 170 may be welded to another flange portion 194.

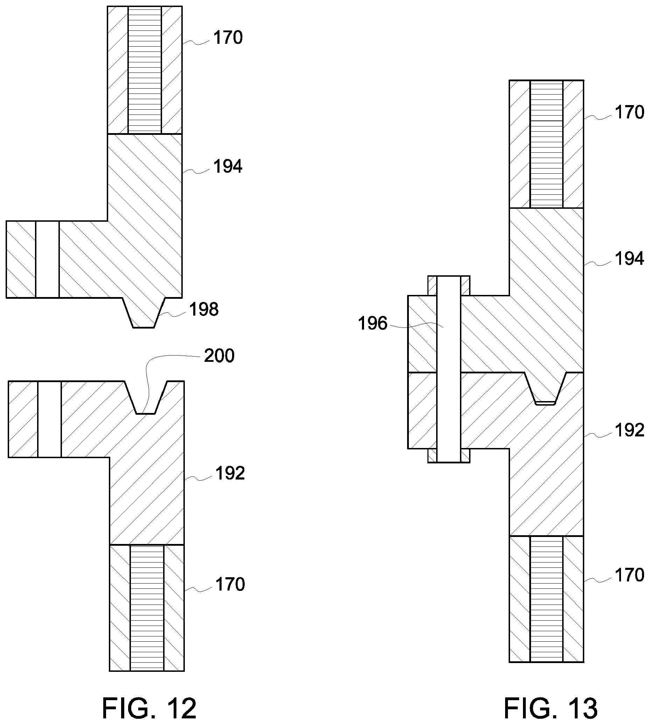

FIG. 13 illustrates the flange portion 192 coupled to the flange portion 194 by a fastener 196. Flange portions 192, 194 can have any configuration to facilitate coupling one multi-material tower section 170 to another multi-material tower section 170. In one suitable embodiment, the multi-material tower section 170 is welded to a male portion of the flange 194 having a projection 198. Another multi-material tower section 170 is welded to a female portion of flange 192 having a slot 200. Any welding process such as, but not limited to, HLAW, EBW and FSW welding can be used to join multi-material tower section 170 with flange portions 192, 194. Projection 198 is inserted into slot 200 and fastener 196 couples flange portion 192 to flange portion 194.

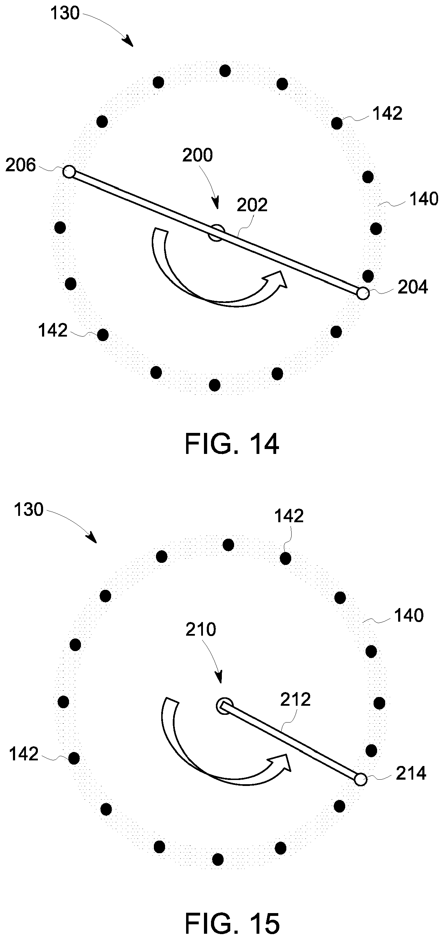

FIGs. 14 and 15 illustrate methods for fabrication of the multi-material tower structure disclosed herein. More particularly, illustrated in FIG. 14 is a first embodiment of a method of manufacturing a multi-material tower structure, such as any of tower structure 130 and 150. For purposes of illustration the method is shown in conjunction with the multi-material tower structure 130. During fabrication, the metal printing, and more particular the additive manufacture of the internal reinforcement structure 142 occurs at high temperatures that may lead to damage of the surrounding concrete material 140. Accordingly, in an embodiment, during the additive manufacturing process, the internal reinforcement structures 142 are printed first. The concrete material 140 can then be printed around the cooled metal, and more particularly, around the internal reinforcement structures 142. To accomplish such, as best illustrated in FIG. 14, in an additive manufacturing system 200, a print head 202 is illustrated as including a concrete nozzle 204 and a metal nozzle 206. During rotation, as indicated by the directional arrow, the metal nozzle 206 prints metal to form the internal reinforcement structures 142, simultaneous with the concrete nozzle 204 printing the concrete material 140. In an alternate embodiment as best illustrated in FIG. 15, illustrated is an additive manufacturing system 210, including a print head 212 including a single nozzle 214 for printing a metal to form the internal reinforcement structures 142 during a first rotation, followed by the concrete material 140 during a subsequent rotation, as indicated by the directional arrow.

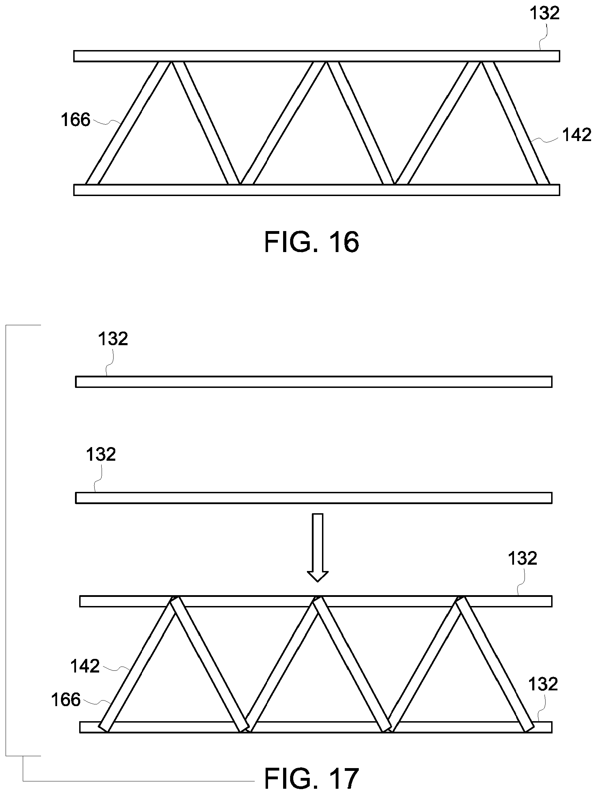

FIGs. 16 and 17 illustrate additional methods for fabrication of the multi-material tower structure disclosed herein. More particularly, illustrated in FIG. 16 is a first embodiment of a method of manufacturing a multi-material tower structure, such as tower sections 160 and 170. It is anticipated that the multi-material tower sections 160, 170 can be printed of a concrete material or a metal material, such as steel, or any combination of the two, such as concrete wall structures 132 with metal internal reinforcement structure 142, and more specifically the internal truss structure 166 or concrete wall structures 132 with concrete internal reinforcement structure 142, and more specifically the internal truss structure 166. For purposes of illustration the method is shown in conjunction with the multi-material tower structure 160. Accordingly, in an embodiment, during the additive manufacturing process, the internal reinforcement structures 142 may be printed simultaneous or separate from printing of the wall structures 132. To accomplish such, as best illustrated in FIG. 16, in an additive manufacturing system 300, the wall structures 132 and the internal reinforcement structures 142, and more specifically the internal truss structure 166, may be printed simultaneously during a single rotation. In an alternate embodiment as best illustrated in FIG. 17, the wall structures 132 may be printed during a first rotation, followed by the internal reinforcement structures 142, and more specifically the internal truss structure 166, during a subsequent rotation, in a next step.

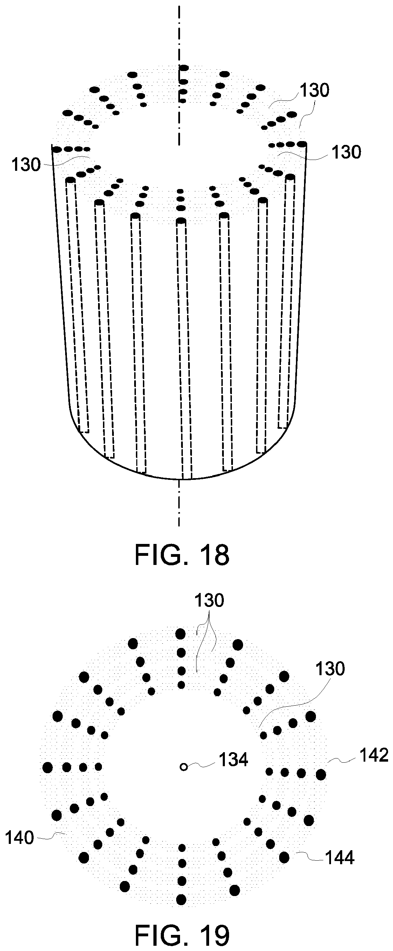

Referring now to FIGs. 18 and 19, illustrated is another method for fabrication of the multi-material tower structures disclosed herein. In this particular embodiment, it is anticipated that the multi-material tower sections130, 150, 160, 170 can be printed of a concrete material or a metal material or any combination of the two, such as concrete wall structures 132 with metal internal reinforcement structure 142 or concrete wall structures 132 with concrete internal reinforcement structure 142. For purposes of illustration the method is shown in conjunction with the multi-material tower structure 130, previously disclosed. Accordingly, in an embodiment, during the additive manufacturing process, a plurality of multi-material tower sections 130 are printed simultaneous, and in a nested concentric manner. Thus, the tower structure has a tapered diameter over the entire length of the tower mast 102, but can have a constant or tapered diameter over each multi-material tower section 130.

Using additive manufacturing technology, the multi-material tower sections 130 are printed in such "nested" concentric tower sections in place, such that after the complete tower mast structure, or the desired portion of the overall tower mast structure is printed, the nested multi-material tower sections 130 can be "telescoped" and then affixed together utilizing any of the previously disclosed methods, or in addition, through the use of grouting or additional adhesives during the printing process, or the like, to maintain the tower mast 102 extension at its full height.

Accordingly, by utilizing additive manufacturing technologies, such as 3D printing, "onsite" wind turbine tower manufacturing is enabled. In addition, by utilizing as additive manufacturing technologies, such as 3D printing, optimized tower mast structures for wind turbine towers can be developed that facilitate reducing the wall thickness and weight of the tower mast while increasing the stiffness of the tower mast. In addition, by utilizing as additive manufacturing technologies, such as 3D printing, optimized tower mast structures for wind turbine towers can be developed that facilitate manufacturing and assembly of the tower mast while reducing material, transportation and assembly costs. Further, by utilizing as additive manufacturing technologies, such as 3D printing, optimized tower mast structures for wind turbine towers can be developed that facilitate complying with transportation regulations.

In addition, additive manufacturing technologies provide for 3D printed internal reinforcement structures that can be engineered and built to specific locations within a wall structure such that the overall weight of the wind turbine tower can be reduced. The multi-material tower structures disclosed herein may additionally include guy wire stabilization.

The tower section can be used for new manufacture of wind turbines or for integration with existing wind turbines. In one embodiment, the multi-material tower section includes a tapered structure that facilitates decreasing the wall thickness of the tower mast and reducing the mass of the tower mast. The tapered structure also increases stiffness of the tower mast to enhance the strength/weight ratio of the tower. Additionally, the tower sections further enhance the moment of inertia of the tower as inertia is proportional to stiffness. The increased stiffness and lower mass of the tower mast reduces the required base mass to support the tower mast in the ground.

A technical effect of the multi-material tower sections described herein includes the ability to optimize the profile and materials within the sections which facilitates reducing the wall thickness and weight of the tower mast. Another technical effect of optimizing the profile and materials includes increasing the stiffness of the tower mast. By optimizing the profile and materials, large megawatt turbines can be built with higher tower mast heights. Another technical effect of the multi-material tower sections includes coupling tower sections together at the assembly site. The multi-material tower sections decrease the overall cost of the tower by reducing direct material costs, transportation costs and assembling costs.

Exemplary embodiments of a multi-material tower section and methods of manufacturing and assembling a tower mast are described above in detail. The multi-material tower section and methods are not limited to the specific embodiments described herein.

Although specific features of various embodiments of the invention may be shown in some drawings and not in others, this is for convenience only.

This written description uses examples to disclose the invention, including the best mode, and also to enable any person skilled in the art to practice the invention, including making and using any layers or systems and performing any incorporated methods. The patentable scope of the invention is defined by the claims, and may include other examples that occur to those skilled in the art. Such other examples are intended to be within the scope of the claims.

## Claims

1. A wind turbine (100) having a tower mast (102) having a longitudinal axis, said tower mast (102) comprising:
a plurality of multi-material tower sections (130, 150, 160, 170) for the tower mast (102), said plurality of multi-material tower sections (130) comprising:
at least one additively manufactured wall structure (132) comprised of at least one material; and
a plurality of additively manufactured internal reinforcement structures (142) comprised of at least one additional material and disposed therewith the at least one additively manufactured wall structure (132),
wherein the plurality of multi-material tower sections (130) are configured to be extendable from a nested configuration to form at least a portion of the tower mast (102).

2. The multi-material tower section (130, 150) of claim 1, wherein the at least one additively manufactured wall structure (132) includes a wall structure comprised of a concrete material (140) and wherein the plurality of additively manufactured internal reinforcement structures (142) comprise at least one of a plurality of metal reinforcements (144) embedded in the concrete material (140) during additive manufacture, a plurality of composite reinforcements (144) embedded in the concrete material (140) during additive manufacture, a plurality of concrete reinforcements (144) embedded in the concrete material (140) during additive manufacture and a plurality of t-studs (152) embedded in the concrete material (140) during additive manufacture

3. The multi-material tower section (160, 170) of claims 1-2, wherein the at least one additively manufactured wall structure (132) includes an inner tubular shell (162) and an outer tubular shell (164) and wherein the plurality of additively manufactured internal reinforcement structures (142) comprise a truss structure (166) spanning between the inner tubular shell (162) and the outer tubular shell (164).

4. The multi-material tower section (160, 170) of claim 3, wherein the inner tubular shell (162) and the outer tubular shell (164) are comprised of one of at least one of a metal material, a composite material and a concrete material and the truss structure (166) is comprised of at least one of a metal material, a composite material and a concrete material.

5. The multi-material tower section (160, 170) of claim 4, wherein the truss structure (166) includes one of a sinusoidal configuration, a straight configuration, a trapezoidal configuration and a honeycomb configuration.

6. The multi-material tower section (130, 150, 160, 170) of any of the preceding claims, further comprising a coupling flange (192, 194) disposed on opposed ends of the multi-material tower section (130, 150, 160, 170).

7. The multi-material tower section (130, 150, 160, 170) of any of the preceding claims, where the at least one multi-material tower section (130, 150, 160, 170)is formed as one of a one-piece structure or includes multiple sub-component structures coupled together to form the at least one multi-material tower section (130, 150, 160, 170).

8. A method of fabricating a wind turbine (100) having a tower mast (102) having a longitudinal axis, the method comprising:
depositing at least one first material by additive manufacture to form a first portion of a multi-material tower section (130, 150, 160, 170); and
depositing at least one additional material by additive manufacture to form an additional portion of the multi-material tower section (130, 150, 160, 170),
wherein the at least one first material and the at least one additional material are not the same,
wherein depositing the at least one first material by additive manufacture to form the first portion of the multi-material tower section (130, 150, 160, 170) and depositing at least one additional material by additive manufacture to form the additional portion of the multi-material tower section (130, 150, 160, 170) includes depositing the at least one first material and the at least one additional material to form a plurality of multi-material tower sections in a nested configuration that when extended form at least a portion of the tower mast (102).

9. The method of claim 8, further comprising repeating the process to form a plurality of multi-material tower sections (130, 150, 160, 170) and coupling the plurality of multi-material tower sections (130, 150, 160, 170) in an end-to-end manner to form at least a portion of the tower mast.

10. The method of claims 8-9, wherein the first portion comprises one of a wall (132) structure or an internal reinforcement structure (142) and the additional portion is the other of a wall structure (132) or an internal reinforcement structure (142).

## Patentansprüche

1. Windkraftanlage (100) mit einem Turmmast (102) mit einer Längsachse, wobei der Turmmast (102) umfasst:
Eine Vielzahl von Multi-Material-Turmabschnitten (130, 150, 160, 170) für den Turmmast (102), wobei die Vielzahl von Multi-Material-Turmabschnitten (130) umfasst:
mindestens eine additiv hergestellte Wandstruktur (132), die mindestens ein Material umfasst; und
eine Vielzahl von additiv hergestellten inneren Verstärkungsstrukturen (142), die mindestens ein zusätzliches Material umfassen und mit der mindestens einen additiv hergestellten Wandstruktur (132) angeordnet sind,
wobei die Vielzahl von Multi-Material-Turmabschnitten (130) derart konfiguriert ist, dass sie sich aus einer verschachtelten Konfiguration verlängern können, um mindestens einen Abschnitt des Turmmastes (102) zu bilden.

2. Multi-Material-Turmabschnitt (130, 150) nach Anspruch 1, wobei die mindestens eine additiv hergestellte Wandstruktur (132) eine Wandstruktur aufweist, die aus einem Betonmaterial (140) besteht, und wobei die Vielzahl additiv hergestellter innerer Verstärkungsstrukturen (142) mindestens eine aus einer Vielzahl von Metallverstärkungen (144) umfasst, die während der additiven Herstellung in das Betonmaterial (140) eingebettet werden, eine Vielzahl von Verbundverstärkungen (144), die während der additiven Herstellung in das Betonmaterial (140) eingebettet werden, eine Vielzahl von Betonverstärkungen (144), die während der additiven Herstellung in das Betonmaterial (140) eingebettet werden, und eine Vielzahl von T-Bolzen (152), die während der additiven Herstellung in das Betonmaterial (140) eingebettet werden.

3. Multi-Material-Turmabschnitt (160, 170) nach Ansprüchen 1 - 2, wobei die mindestens eine additiv hergestellte Wandstruktur (132) eine innere rohrförmige Schale (162) und eine äußere rohrförmige Schale (164) aufweist und wobei die Vielzahl der additiv hergestellten inneren Verstärkungsstrukturen (142) eine Tragstruktur (166) aufweist, die sich zwischen der inneren rohrförmigen Schale (162) und der äußeren rohrförmigen Schale (164) erstreckt.

4. Multi-Material-Turmabschnitt (160, 170) nach Anspruch 3, wobei die innere rohrförmige Schale (162) und die äußere rohrförmige Schale (164) mindestens eines von einem Metallmaterial, einem Verbundmaterial und einem Betonmaterial umfassen und die Tragstruktur (166) mindestens eines von einem Metallmaterial, einem Verbundmaterial und einem Betonmaterial umfasst.

5. Multi-Material-Turmabschnitt (160, 170) nach Anspruch 4, wobei die Tragstruktur (166) eine von einer sinusförmigen Konfiguration, einer geraden Konfiguration, einer trapezförmigen Konfiguration und einer wabenförmigen Konfiguration umfasst.

6. Multi-Material-Turmabschnitt (130, 150, 160, 170) nach einem der vorhergehenden Ansprüche ferner umfassend einen Verbindungsflansch (192, 194) auf, der an gegenüberliegenden Enden des Multimaterial-Turmabschnitts (130, 150, 160, 170) angeordnet ist.

7. Multi-Material-Turmabschnitt (130, 150, 160, 170) nach einem der vorhergehenden Ansprüche, wobei der mindestens eine Multi-Material-Turmabschnitt (130, 150, 160, 170) als eine einteilige Struktur ausgebildet ist oder mehrere Unterkomponentenstrukturen umfasst, die miteinander verbunden sind, um den mindestens einen Multi-Material-Turmabschnitt (130, 150, 160, 170) zu bilden.

8. Verfahren zum Herstellen einer Windkraftanlage (100) mit einem Turmmast (102) mit einer Längsachse, wobei das Verfahren umfasst:
Aufbringen von mindestens einem ersten Material durch additive Herstellung, um einen ersten Abschnitt eines Multi-Material-Turmabschnitts (130, 150, 160, 170) zu bilden; und
Aufbringen von mindestens einem zusätzlichen Material durch additive Herstellung, um einen zusätzlichen Abschnitt des Multi-Material-Turmabschnitts (130, 150, 160, 170) zu bilden,
wobei das mindestens eine erste Material und das mindestens eine zusätzliche Material nicht dasselbe sind,
wobei das Aufbringen des mindestens einen ersten Materials durch additive Herstellung, um den ersten Abschnitt des Multi-Material-Turmabschnitts (130, 150, 160, 170) zu bilden, und das Aufbringen mindestens eines zusätzlichen Materials durch additive Herstellung, um den zusätzlichen Abschnitt des Multi-Material-Turmabschnitts (130, 150, 160, 170) zu bilden, das Aufbringen des mindestens einen ersten Materials und des mindestens einen zusätzlichen Materials umfasst, um eine Vielzahl von Multi-Material-Turmabschnitten in einer verschachtelten Konfiguration zu bilden, die, wenn sie sich verlängern, mindestens einen Abschnitt des Turmmasts (102) bilden.

9. Verfahren nach Anspruch 8, welches ferner umfasst, das Verfahren zu wiederholen, um eine Vielzahl von Multi-Material-Turmabschnitten (130, 150, 160, 170) zu bilden, und die Vielzahl von Multi-Material-Turmabschnitten (130, 150, 160, 170) in einer Ende-an-Ende Weise zu verbinden, um zumindest einen Abschnitt des Turmmastes zu bilden.

10. Verfahren nach einem der Ansprüche 8 bis 9, wobei der erste Abschnitt eines von einer Wandstruktur (132) oder einer internen Verstärkungsstruktur (142) umfasst und der zusätzliche Abschnitt das andere aus einer Wandstruktur (132) oder einer internen Verstärkungsstruktur (142) ist.

## Revendications

1. Turbine éolienne (100) ayant un mât de tour (102) ayant un axe longitudinal, ledit mât de tour (102) comprenant :
une pluralité de sections de tour multi-matériaux (130, 150, 160, 170) pour le mât de tour (102), ladite pluralité de sections de tour multi-matériaux (130) comprenant :
au moins une structure de paroi fabriquée de manière additive (132) comprenant au moins un matériau ; et
une pluralité de structures de renfort interne fabriquées de manière additive (142) comprenant au moins un matériau supplémentaire et disposées avec celles-ci l'au moins une structure de paroi fabriquée de manière additive (132),
dans laquelle la pluralité de sections de tour multi-matériaux (130) sont configurées pour être prolongeables depuis une configuration imbriquée pour former au moins une partie du mât de tour (102).

2. Section de tour multi-matériaux (130, 150) selon la revendication 1, dans laquelle l'au moins une structure de paroi fabriquée de manière additive (132) inclut une structure de paroi comprenant un matériau en béton (140) et dans laquelle la pluralité de structures de renfort interne fabriquées de manière additive (142) comprennent au moins l'un d'une pluralité de renforts en métal (144) intégrés dans le matériau en béton (140) pendant la fabrication additive, une pluralité de renforts en composite (144) intégrés dans le matériau en béton (140) pendant la fabrication additive, une pluralité de renforts en béton (144) intégrés dans le matériau en béton (140) pendant la fabrication additive et une pluralité de goujons en t (152) intégrés dans le matériau en béton (140) pendant la fabrication additive

3. Section de tour multi-matériaux (160, 170) selon les revendications 1 à 2, dans laquelle l'au moins une structure de paroi fabriquée de manière additive (132) inclut une coque tubulaire intérieure (162) et une coque tubulaire extérieure (164) et dans laquelle la pluralité de structures de renfort interne fabriquées de manière additive (142) comprennent une structure en treillis (166) s'étendant entre la coque tubulaire intérieure (162) et la coque tubulaire extérieure (164).

4. Section de tour multi-matériaux (160, 170) selon la revendication 3, dans laquelle la coque tubulaire intérieure (162) et la coque tubulaire extérieure (164) comprennent l'un d'au moins l'un d'un matériau en métal, un matériau en composite et un matériau en béton et la structure en treillis (166) comprend au moins l'un d'un matériau en métal, un matériau en composite et un matériau en béton.

5. Section de tour multi-matériaux (160, 170) selon la revendication 4, dans laquelle la structure en treillis (166) inclut l'une d'une configuration sinusoïdale, une configuration droite, une configuration trapézoïdale et une configuration en nid d'abeille.

6. Section de tour multi-matériaux (130, 150, 160, 170) selon l'une quelconque des revendications précédentes, comprenant en outre une bride de couplage (192, 194) disposée sur des extrémités opposées de la section de tour multi-matériaux (130, 150, 160, 170).

7. Section de tour multi-matériaux (130, 150, 160, 170) selon l'une quelconque des revendications précédentes, où l'au moins une section de tour multi-matériaux (130, 150, 160, 170) est formée en tant que l'une d'une structure monobloc ou inclut de multiples structures de sous-composants couplées ensemble pour former l'au moins une section de tour multi-matériaux (130, 150, 160, 170).

8. Procédé de fabrication d'une turbine éolienne (100) ayant un mât de tour (102) ayant un axe longitudinal, le procédé comprenant :
le dépôt d'au moins un premier matériau par fabrication additive pour former une première partie d'une section de tour multi-matériaux (130, 150, 160, 170) ; et
le dépôt d'au moins un matériau supplémentaire par fabrication additive pour former une partie supplémentaire de la section de tour multi-matériaux (130, 150, 160, 170),
dans lequel l'au moins un premier matériau et l'au moins un matériau supplémentaire ne sont pas les mêmes,
dans lequel le dépôt de l'au moins un premier matériau par fabrication additive pour former la première partie de la section de tour multi-matériaux (130, 150, 160, 170) et le dépôt d'au moins un matériau supplémentaire par fabrication additive pour former la partie supplémentaire de la section de tour multi-matériaux (130, 150, 160, 170) inclut le dépôt de l'au moins un premier matériau et de l'au moins un matériau supplémentaire pour former une pluralité de sections de tour multi-matériaux dans une configuration imbriquée qui lorsqu'elles sont prolongées forment au moins une partie du mât de tour (102).

9. Procédé selon la revendication 8, comprenant en outre la répétition du processus pour former une pluralité de sections de tour multi-matériaux (130, 150, 160, 170) et le couplage de la pluralité de sections de tour multi-matériaux (130, 150, 160, 170) dans une manière d'extrémité à extrémité pour former au moins une partie du mât de tour.

10. Procédé selon les revendications 8 à 9, dans lequel la première partie comprend l'une d'une structure de paroi (132) ou d'une structure de renfort interne (142) et la partie supplémentaire est l'autre d'une structure de paroi (132) ou d'une structure de renfort interne (142).
